**Europäisches Patentamt**

**European Patent Office**

**Office européen des brevets**

(19)

(11) Publication number : **0 319 564 B1**

# (12) EUROPEAN PATENT SPECIFICATION

(45) Date of publication of patent specification :
**28.10.92 Bulletin 92/44**

(51) Int. Cl.⁵ : **B01D 33/21**

(21) Application number : **88906190.9**

(22) Date of filing : **22.06.88**

(86) International application number :
**PCT/SE88/00349**

(87) International publication number :
**WO 88/10144 29.12.88 Gazette 88/28**

(54) ROTATING FILTER WITH OUTER FILTRATE CONDUITS.

(30) Priority : **24.06.87 SE 8702620**

(43) Date of publication of application :
**14.06.89 Bulletin 89/24**

(45) Publication of the grant of the patent :
**28.10.92 Bulletin 92/44**

(84) Designated Contracting States :
**AT DE FR GB SE**

(56) References cited :
**SE-B- 431 405**
**SE-B- 447 208**
**US-A- 4 634 529**

(73) Proprietor : **Nilsson, Bjarne**
**Lanterngatan 9**
**S-462 00 Vänersborg (SE)**

(72) Inventor : **Nilsson, Bjarne**
**Lanterngatan 9**
**S-462 00 Vänersborg (SE)**

(74) Representative : **Modin, Jan et al**
**c/o Axel Ehrners Patentbyra AB Box 10316**
**S-100 55 Stockholm (SE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 319 564 B1

Jouve, 18, rue Saint-Denis, 75001 PARIS

## Description

The present invention relates to a disk filter including a plurality of rotatable, axially spaced annular filter disks, which are adapted to be partially immersed in a liquid or a suspension to be filtered, each disk consisting of a plurality of filter sectors and each filter sector including spaced filtering means, the space between said filtering means of each filter sector being in fluid communication with an axial filtrate discharge conduit extending between the outer peripheries of said filter disks, said axial filtrate discharge conduit having an opening therein for receiving filtrate from an associated one of said filter sectors.

A filter of this kind is described, a.o., in the Swedish Patent Specification SE-C-8305817-2 and the corresponding European and American Patent Specifications EP-B1-0160069 and US-A-4 634 529, respectively. According to this patent, the backwash barriers, i.e., barriers preventing re-wetting of a filter cake, such as dewatered fibres, deposited on the filter elements, extend from each filter element into associated axially directed conduits and comprise an extension of the trailing edge of the filter element as seen in the direction of rotation. It has been found that backwash barriers arranged in this way are relatively complicated to accomplish in practice.

In a disk filter of the kind having axial filtrate discharge conduits at the inner peripheries of the annular disks, such as the filter disclosed in SE-B-447 208, the backwash problem does not exist, since an axial conduit is located under an associated filter sector during a sufficiently long time of a revolution to enable complete drainage of the sector before it is lowered again under the suspension surface.

The object of the present invention is consequently to provide a disk filter of the kind initially stated with backwash barriers which can be realized in a practically favourable fashion.

This has been achieved by the invention having been given the distinguishing features disclosed in the following claims.

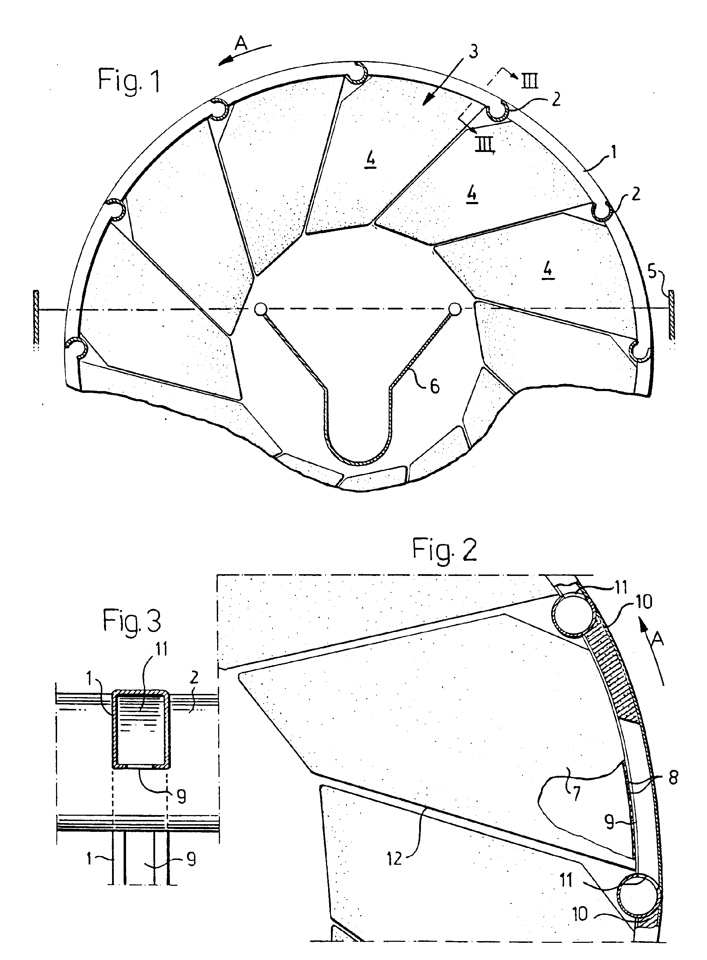

The invention will now be described hereinafter with reference to the accompanying drawing, in which figure 1 is a partial cross-section through a filter rotor, figure 2 is a detail to a larger scale of the filter rotor and figure 3 is a section along the line III-III in figure 1 to a further enlarged scale.

A filter rotor for a rotating filter includes a plurality of axially spaced annular filter disk holders 1 and filtrate conduits 2 connecting them axially. figure 1 is a cross-section through such a filter rotor, which carries an annular filter disk 3 comprising a plurality of filter sectors 4. All the filter sectors of the filter are partially immersed in the liquid to be filtered which is received in a container 5. Extending through the central opening of the filter disks is a collecting trough 6 for solid material such as cellulose fibres, which are deposited on the filter sectors during filtration and are caused to fall from the sectors when the latter are above the trough.

The illustrated filter sectors are of the type including two mutually spaced carcass elements (not shown in detail) and a filter cloth 7 kept spaced from the elements. The carcass elements are adapted for leading filtrate flowing through the filter cloth 7 to the space between the carcass elements. From this space the filtrate can flow through radial outlet openings 8 in the outer periphery of the filter sector 4.

The filter disk holder 1 has a substantially U-shaped cross-section with the opening 9 of the cross-section facing radially inwardly. In a manner not more closely illustrated, the filter sectors 4 are mounted on the filter disk holder 1 so that their outlet openings 8 connect to the opening 9. The filtrate can thus flow from the interior of the filter sectors 4 to the interior of the filter disk holders 1. The outlet openings 8 are preferably arranged only in the part of the periphery of the filter sectors 4 which is last rised above the liquid surface for rotation of the filter rotor in the direction indicated by the arrow A. The interior of the filter disk holder 1 is suitably filled with a compound 10 in the portion which is located before the outlet openings 8 in the direction of rotation.

The filter holder 1 and the axially directed filtrate conduits 2 are connected to each other such that that the conduits 2, illustrated here as being circular pipes, extend uninterruptedly for the whole of the axial direction through all the filter disk holders 1, while the latter, at least from the flow aspect, are interrupted at each axial filtrat conduit 2. More specifically, the arrangement is such that the axial filtrate conduits 2 have openings 11 facing towards the direction of rotation A and are formed to suit the cross-section of the filter disk holder 1 (figure 3). The section of the filter holder 1 is tightly welded round these openings 11. The filter disk holder 1 is also welded to the opposite end of the filter conduits 2, where the tube wall is unbroken. flow connection has thus been achieved by the described arrangement from the interior of the filter sectors 4 to the axial filtrate conduits 2.

In accordance with the invention, and as will be clearly seen from the figures, the main part of the cross-section of the filtrate conduits 2 is located after every other part of the associated filter sector 4, reckoned in the direction of rotation A. This means that as long as the filtrate flows from a filter sector, the associated axial filtrate conduit 2 is located under the filter sector and can receive and discharge filtrate.

Preferably, an imagined extension of the filter sector trailing edge 12 in the direction of rotation A is a tangent to the associated axial filtrate conduit 2. This means, in particular when the filter sectors 4 have the illustrated obliqe shape, that the openings 11 of the axial filtrate conduits 2 are above the bottoms of the conduits when the conduits 2 are in their uppermost position, i.e. the filtrate in the conduits 2 is effectively prevented from running back into the filter sectors. for further improving the removal of filtrate through the conduits 2, a filter sector 4 in one filter disk is displaced relative a filter sector 4 in the next filter disk reckoned in the flow direction of the conduits 2, so that in the direction of rotation A the first mentioned filter sector is in advance of the other filter sector (not shown). The filtrate conduit 2 to which these two filter elements are connected will thus slope downwards in the flow direction when the filter sectors rise above the liquid level. In such a case it is also suitable that the radial filtrate conduits to which the axial filtrate conduits 2 are connected and which lead to the filtrate discharge of the filter, slope downwards when the filter sectors connected to the associated axial filtrate conduit 2 rise above the liquid surface (not shown).

**Claims**

1. A disk filter including a plurality of rotatable, axially spaced annular filter disks (3), which are adapted to be partially immersed in a liquid or a suspension to be filtered, each disk consisting of a plurality of filter sectors (4) and each filter sector including spaced filtering means (7), the space between said filtering means of each filter sector being in fluid communication with an axial filtrate discharge conduit (2) extending between the outer peripheries of said filter disks, said axial filtrate discharge conduit (2) having an opening (11) therein for receiving filtrate from an associated one of said filter sectors (4), **characterized in** that said opening is provided in a portion of said axial filtrate discharge conduit (2) facing substantially upwards in a rotational position of said filter disk (3) where said associated filter sector (4) rises above the liquid surface (L) upon rotation of said filter disk, and said associated filter sector in said rotational position being located substantially entirely above said axial filtrate discharge conduit (2) and being in fluid communication therewith from above through said opening (11), thereby preventing filtrate received in said axial filtrate discharge conduit from flowing back into said associated filter sector in more advanced rotational positions of said filter disk than said rotational position.

2. A disk filter as claimed in claim 1, **characterized in** that said axial filtrate discharge conduit comprises a tube (2) having a circular cross-section, an imaginary extension of a trailing edge (12) of said filter sector (4) being substantially tangential to said axial filtrate discharge conduit (2).

3. A disk filter as claimed in claim 1 or 2, **characterized in** that said filter sector (4) is in fluid communication with an annular channel (1) located at said outer periphery of said filter disk (3), said annular channel (1) being in fluid communication radially inwardly with said filter sector and circumferentially with said axial filtrate discharge conduit (2).

4. A disk filter according to any one of the preceding claims. **characterized in** that each of said filter sectors (4) of one of said filter disks (3) is circumferen tially displaced relative to a corresponding one of said filter sectors (4) of an adjacent one of said filter disks (3), the displacement being such that said axial filtrate conduit slopes towards an outlet of said filter in said rotational position of said filter.

5. A disk filter according to claim 4, **characterized in** that each of said axial filtrate conduits (2) is connected to a substantially radially inwardly directed filtrate conduit, said substantially radially directed filtrate conduit sloping towards said outlet in said rotational position of said filter.

6. A disk filter according to any one of the preceding claims, wherein the filter sectors (4) of each filter disk (3) is carried by an annular disk holder (1) mounting said filter sectors at its inner periphery, **characterized in** that said annular disk holder includes a channel having a radially inwardly directed opening (9), each of said filter sectors being mounted to said annular disk holder such that the space between said filtering means is in fluid communication with said channel through said opening (9), said channel being in fluid communication from above with an axially directed filtrate discharge conduit (2) in rotational positions of said filter disk where said filter sector rises above the liquid surface upon rotation of said filter disk.

7. A disk filter according to claim 6, **characterized in** that each of said axial filtrate discharge conduits extends through each of said annular disk holders.

8. A disk filter according to claim 6 or 7, **characterized in** that an outer peripheral edge of each filter sector includes outlet openings (8) for filtrate located at a portion of said outer peripheral edge last rising above said liquid surface upon rotation of said filter disk, said outlet openings being connected for fluid communication with said opening (9) of said channel, and that portions of said opening and said channel not connected for fluid communication with said outlet openings are filled with a compound (10).

## Patentansprüche

1. Scheibenfilter mit einer Vielzahl von drehbaren, axial im Abstand zueinander angeordneten, ringförmigen Filterscheiben (3), die so ausgebildet sind, daß sie teilweise in eine zu filternde Flüssigkeit oder Lösung eingetaucht sind, wobei jede Scheibe aus einer Vielzahl von Filtersektoren (4) besteht und jeder Filtersektor zueinander beabstandete Filtermittel (7) aufweist, wobei der Zwischenraum zwischen den Filtermitteln jedes Filtersektors in Strömungsverbindung mit einer axialen Filtratentladungsleitung (2) steht, die sich zwischen dem äußeren Umfang der Filterscheiben erstreckt, wobei die axiale Filtratentladungsleitung (2) eine Öffnung (11) aufweist, zur Aufnahme von Filtrat aus einem zugeordneten der Filtersektoren (4), dadurch gekennzeichnet, daß die Öffnung in einem Abschnitt der axialen Filtratentladungsleitung (2) vorgesehen ist, der im wesentlichen nach oben weist, wenn die Filterscheibe (3) in einer Drehposition ist, bei der der zugeordnete Filtersektor (4) bei Drehung der Filterscheibe oberhalb der Flüssigkeitsoberfläche (L) angehoben ist, und der zugeordnete Filtersektor in dieser Drehstellung im wesentlichen vollständig oberhalb der axialen Filtratentladungsleitung (2) liegt und von oben durch die Öffnung 11 hindurch mit dem Filtersektor in Strömungsverbindung steht, wodurch verhindert wird, daß in der axialen Filtratentladungsleitung aufgenommenes Filtrat zurück in den zugeordneten Filtersektor fließt, wenn eine fortgeschrittenere Drehstellung der Filterscheibe als die momentane Drehstellung eingenommen wird.

2. Scheibenfilter nach Anspruch 1, dadurch gekennzeichnet, daß die axiale Filtratentladungsleitung eine Röhre (2) mit kreisförmigem Querschnitt aufweist, wobei eine gedachte Linie von der nachlaufenden Kante (12) des Filtersektors (4) im wesentlichen eine Tangente an die axiale Filtratentladungsleitung (2) ist.

3. Scheibenfilter nach Anspruch 1 oder 2, dadurch gekennzeichnet, daß der Filtersektor (4) mit einem ringförmigen Kanal (1) in Strömungsverbindung steht, wobei der Kanal an dem äußeren Umfang der Filterscheibe (3) angeordnet ist und radial nach innen mit dem Filtersektor und in Umfangsrichtung mit der axialen Filtratentladungsleitung (2) in Strömungsverbindung steht.

4. Scheibenfilter nach einem der vorhergehenden Ansprüche, dadurch gekennzeichnet, daß jeder Filtersektor (4) einer der Filterscheiben (3) relativ zu einem zugeordneten Filtersektor (4) einer benachbarten Filterscheibe (3) versetzt angeordnet ist, wobei der Versatz der Art ist, daß die axiale Filtratleitung in Richtung zu einem Auslaß des Filters in der Drehstellung des Filters gerichtet ist.

5. Scheibenfilter nach Anspruch 4, dadurch gekennzeichnet, daß jede axiale Filtratleitung (2) mit einer im wesentlichen radial nach innen gerichteten Filtratleitung verbunden ist, wobei die im wesentlichen radial gerichtete Filtratleitung in der Drehstellung des Filters zu dem Auslaß hin geneigt ist.

6. Scheibenfilter nach irgendeinem der vorhergehenden Ansprüche, wobei die Filtersektoren (4) jeder Filterscheibe (3) von einem ringförmigen Scheibenhalter (1) gehalten sind, der die Filtersektoren an seinem inneren Umfang trägt, dadurch gekennzeichnet, daß der ringförmige Scheibenhalter einen Kanal mit einer radial nach innen gerichteten Öffnung (9) aufweist, wobei jeder Filtersektor so an dem ringförmigen Scheibenhalter angebracht ist, daß der Zwischenraum zwischen den Filtermitteln durch die Öffnung (9) hindurch in Strömungsverbindung mit dem Kanal steht, wobei der kanal in Drehstellungen der Filterscheibe, bei denen der Filtersektor bei Drehung der Filterscheibe oberhalb der‚Flüssigkeitsoberfläche angehoben wird, von oben her in Strömungsverbindung mit einer axial gerichteten Filtratentladungsleitung (2) steht.

7. Scheibenfilter nach Anspruch 6, dadurch gekennzeichnet, daß jede der axialen Filtratentladungsleitungen sich durch jeden der ringförmigen Scheibenhalter hindurch erstreckt.

8. Scheibenfilter nach Anspruch 6 oder 7, dadurch gekennzeichnet, daß die äußere Umfangskante jedes Filtersektors eine Auslaßöffnung (8) für Filtrat enthält, wobei die Öffnungen (8) an einem Abschnitt der äußeren peripheren kante liegen, die bei Drehung der Filterscheibe als letzte oberhalb der Flüssigkeitsoberfläche angehoben wird, wobei die Auslaßöffnungen mit der Öffnung (9) des Kanales in Strömungsverbindung stehen und daß Abschnitte der Öffnung und des kanales, die nicht mit den Auslaßöffnungen in Strömungsverbindung stehen, mit einem Füllstoff (10) gefüllt sind.

## Revendications

1. Filtre à disques comprenant une pluralité de disques filtrants annulaires rotatifs (3), axialement espacés, qui sont adaptés à être partiellement immergés dans un liquide ou une suspension à filtrer, chaque disque consistant en une pluralité de secteurs filtrants (4) et chaque secteur filtrant comprenant des moyens filtrants espacés (7), l'espace entre lesdits moyens filtrants de chaque secteur filtrant étant en communication de fluide avec un conduit de décharge de filtrat axial (2) s'étendant entre les périphéries extérieures desdits disques filtrants, ledit conduit de décharge de filtrat axial (2) comportant une ouverture (11) en son sein pour recevoir le filtrat d'un desdits secteurs filtrants (4) associés, caractérisé en ce que ladite ouverture est ménagée dans une portion dudit conduit de décharge de filtrat axial (2) donnant sensiblement vers le haut dans une position de rotation dudit disque filtrant (3) où ledit secteur filtrant associé (4) monte au-dessus de la surface du liquide (L) lors de la rotation dudit disque filtrant, et ledit secteur filtrant associé dans ladite position de rotation étant situé sensiblement complètement au-dessus dudit conduit de décharge de filtrat axial (2) et étant en communication de fluide avec celui-ci depuis le dessus via ladite ouverture (11), de manière à empêcher que le filtrat reçu dans ledit conduit de décharge de filtrat axial reflue dans ledit secteur filtrant dans des positions de rotation dudit disque filtrant plus avancées que ladite position de rotation.

2. Disque filtrant selon la revendication 1, caractérisé en ce que ledit conduit de décharge de filtrat axial comprend un tube (2) présentant une section transversale circulaire, une extension imaginaire d'un bord postérieur (12) dudit secteur filtrant (4) étant sensiblement tangentielle par rapport audit conduit de décharge de filtrat axial (2).

3. Disque filtrant selon la revendication 1 ou 2, caractérisé en ce que ledit secteur filtrant (4) est en communication de fluide avec une gorge en U annulaire (1) située à ladite périphérie extérieure dudit disque filtrant (3), ladite gorge annulaire (1) étant en communication de fluide radialement vers l'intérieur avec ledit secteur filtrant et circonférentiellement avec ledit conduit de décharge de filtrat axial (2).

4. Disque filtrant selon l'une quelconque des revendications précédentes, caractérisé en ce que chacun desdits secteurs filtrants (4) d'un desdits disques filtrants (3) est décalé circonférentiellement relativement à un secteur correspondant desdits secteurs filtrants (4) d'un disque filtrant (3) adjacent, le décalage étant tel que ledit conduit de filtrat axial est incliné vers une sortie dudit filtre dans ladite position de rotation dudit filtre.

5. Disque filtrant selon la revendication 4, caractérisé en ce que chacun desdits conduits de filtrat axiaux (2) est relié à un conduit de filtrat dirigé sensiblement radialement vers l'intérieur, ledit conduit de filtrat dirigé sensiblement radialement étant incliné vers ladite sortie dans ladite position de rotation dudit filtre.

6. Disque filtrant selon l'une quelconque des revendications précédentes, dans lequel les secteurs filtrants (4) de chaque disque filtrant (3) sont supportés par un support de disque annulaire (1) fixant lesdits secteurs filtrants à leur périphérie intérieure, caractérisé en ce que ledit support de disque annulaire comprend une gorge en U comportant une ouverture (9) dirigée radialement vers l'intérieur, chacun desdits secteurs filtrants étant monté sur ledit support de disque annulaire de manière que l'espace entre lesdits moyens filtrants soit en communication de fluide avec ladite gorge via ladite ouverture (9), ladite gorge étant en communication de fluide depuis le dessus avec un conduit de décharge de filtrat dirigé axialement (2) dans les positions de rotation dudit disque filtrant lorsque ledit secteur filtrant monte au-dessus de la surface du liquide lors de la rotation dudit disque filtrant.

7. Disque filtrant selon la revendication 6, caractérisé en ce que chacun desdits conduits de décharge de filtrat axiaux s'étend à travers chacun desdits supports de disque annulaires.

8. Disque filtrant selon la revendication 6 ou 7, caractérisé en ce qu'un bord périphérique extérieur de chaque secteur filtrant comprend des ouvertures de sortie (8) pour le filtrat situées à une portion dudit bord périphérique extérieur levée en dernier au-dessus de ladite surface du liquide lors de la rotation dudit disque filtrant, lesdites ouvertures de sortie étant reliées en communication de fluide avec ladite ouverture (9) de ladite gorge, et en ce que les portions de ladite ouverture et de ladite gorge n'étant pas reliées en communication de fluide avec lesdites ouvertures de sortie sont remplies d'un composé (10).

A

Fig. 1

3

III

2

4

2

4

1

4

2

5

6

Fig. 2

11

10

A

7

8

Fig. 3

9

11

1

2

9

12

1

9

11

1

9

10